# FASCICULE DE BREVET EUROPEEN

(11) **EP 0 610 185 B1**
(45) Date de publication et mention de la délivrance du brevet: **16.10.1996**
(21) Numéro de dépôt: 91920482.6
(22) Date de dépôt: 30.10.1991
(51) Int. Cl.: G02B 26/06

(54) **DISPOSITIF DE MODULATION OPTIQUE A CELLULES DEFORMABLES**
VORRICHTUNG ZUR OPTISCHEN MODULATION MIT VERFORMBAREN ZELLEN
OPTICAL MODULATION DEVICE HAVING VARIABLE-SIZED CELLS

(43) Date de publication de la demande: 17.08.1994
(73) Titulaire: THOMSON-CSF, 75008 Paris (FR)
(72) Inventeur: HUIGNARD, Jean-Pierre, F-92402 Courbevoie Cédex (FR); LOISEAUX, Brigitte, F-92402 Courbevoie Cédex (FR); PUECH, Claude, F-92402 Courbevoie Cédex (FR)
(74) Mandataire: Guérin, Michel
(86) Numéro de dépôt international: FR9100857
(87) Numéro de publication internationale: WO9309461

(56) Documents cités:
- FR-A- 2 615 002
- GB-A- 2 238 880
- US-A- 4 967 063

## Description

L'invention concerne un dispositif de modulation optique dans lequel une onde de lumière visible, ou proche du visible, est modulée spatialement à l'aide d'une pluralité de cellules déformables chacune sous l'effet d'une tension électrique appliquée à leurs bornes. L'invention concerne plus particulièrement des moyens pour faciliter la commande de telles cellules déformables.

Dans la présente description, par l'expression "cellules déformables sous l'effet d'une tension électrique", on entend définir des cellules qui présentent une variation de dimension en fonction d'une tension qui leur est appliquée, et l'on doit considérer comme étant dans cette catégorie aussi bien des cellules constituées à partir de matériaux piézoélectriques (c'est-à-dire présentant l'effet piézoélectrique inverse), que des cellules constituées à partir de matériaux différents présentés par exemple sous forme de films et obéissants à des effets différents, dès lors que l'on peut noter là aussi une déformation, notamment par variation locale d'épaisseur, due à l'application d'une tension.

Des cellules déformables sous l'effet d'une tension sont utilisées dans différents domaines, et en particulier dans celui de l'imagerie à travers une atmosphère turbulente, notamment en astronomie. Dans de tels cas, il peut être nécessaire de corriger spatialement la phase du front d'onde optique provenant de l'objet que l'on veut observer, pour reformer une image correcte de ce dernier.

Il est connu à cet effet de réfléchir le front d'onde par un miroir présentant localement des différences par rapport à un plan moyen de miroir ; ceci afin d'introduire des modifications locales de phase et compenser ainsi les distorsions de phases introduites par la traversée de l'atmosphère turbulente. Un tel miroir est appelé "miroir de modulation" dans la suite de la description.

Les corrections de phases à apporter au front d'onde sont déterminées par un système senseur de front d'onde, en lui-même classique, tel que par exemple celui qui est connu sous le nom de "Interféromètre de HARTMANN" ; cet appareil a été développé en FRANCE par l'Office National d'Etudes et Recherches Aérospatiales (O.N.E.R.A.).

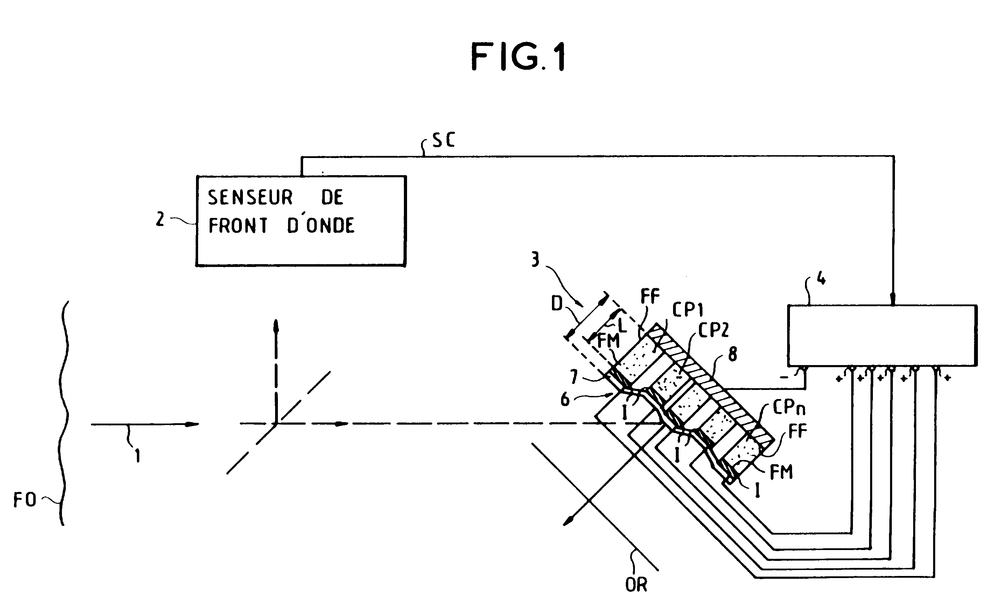

La figure 1 montre schématiquement une installation classique destinée à corriger la phase d'un front d'onde F O à l'aide d'un système senseur 2 et d'un miroir de modulation 3 tels que ci-dessus définis.

Le front d'onde F O se propage dans la direction montrée par la flèche 1 vers le miroir de modulation 3 et avant de parvenir à ce dernier, il est partiellement dévié vers le système senseur 2. Celui-ci délivre en réponse des signaux Sc relatifs aux corrections de phase à effectuer. Ces signaux de correction SC sont appliqués à un dispositif de commande 4, qui lui-même commande le miroir de modulation 3.

L'onde réfléchie O R par le miroir modulateur 3 représente l'onde corrigée.

Il est courant d'utiliser des cellules en matériaux piézoélectriques pour modifier la planéité de la surface réfléchissante 6 du miroir de modulation 3, en fonction des corrections de phases à apporter. Un montage classique consiste par exemple à former la surface réfléchissante 6 par un film souple 7, par exemple en élastomère, sur lequel est déposée une couche métallisée (non représentée) destinée à former la surface réfléchissante 6 ; ce film est appliqué, par une face opposée à celle qui constitue la surface réfléchissante 6, sur une surface constituée par des extrémités formant les faces mobiles FM d'un nombre n de cellules piézoélectriques CP1, CP2, ..., CPn. L'extrémité ou face opposée de chaque cellule constitue une face fixe FF qui est mécaniquement solidaire d'une plaque 8. La plaque 8 peut être électriquement conductrice et constituer ainsi une électrode commune à toutes les cellules piézoélectriques CP1 à CPn. Dans ce cas, chacune des faces mobiles FM comporte une électrode individuelle I pour la commande individuelle de chaque cellule piézoélectrique ; électrode individuelle par l'intermédiaire de laquelle chaque cellule est fixée, par collage par exemple, au film souple 7.

Dans cette configuration, chaque cellule piézoélectrique joue le rôle d'un moteur : pour un point donné de la surface réfléchissante 6, la distance D entre ce point et la plaque 8 est liée à la longueur L de chacune des cellules piézoélectriques qui entourent ce point, cette longueur étant elle-même fonction de la valeur d'une tension de commande délivrée par le dispositif de commande et qui est appliquée à chacune de ces cellules. A cette fin, le dispositif de commande 4 comporte un générateur de tension (non représenté) et la plaque 8 ou électrode commune est reliée à une sortie du dispositif de commande 4 délivrant l'une des polarités de la tension de commande, la polarité négative - par exemple, et d'autre part chacune des électrodes individuelles I est reliée à une sortie indépendante délivrant la polarité positive + ; chaque sortie indépendante délivre la polarité positive + à la valeur appropriée à produire la variation de dimension voulue de la cellule piézoélectrique.

Il est à noter qu'il est possible aussi d'utiliser directement l'ensemble des faces mobiles FM pour former la surface réfléchissante 6, et supprimer ainsi le film 7. Mais ceci peut conduire à augmenter le nombre des cellules piézoélectriques à installer, ce qui à ce jour, n'est pas recommandé compte-tenu des moyens à mettre en oeuvre pour actionner les cellules piézoélectriques.

En effet, pour que les variations de dimension des cellules piézoélectrique soient significatives, il peut être nécessaire de leur appliquer des tensions de commande de valeurs élevées, par exemple de plusieurs milliers de volts dans certaines applications comme la correction en phases de fronts d'ondes, voire 10.000 volts quand une cellule est constituée par un unique barreau piézoélectrique actionné par une unique tension.

Par suite, il est nécessaire de prévoir, pour chaque cellule piézoélectrique, un moyen à haute tension pour obtenir la tension de commande à la valeur désirée, plus un moyen de commutation à haute tension pour appliquer cette tension. Ces deux moyens sont d'un fonctionnement délicat et sont d'un coût très élevé, ce qui explique le fait que les miroirs modulateurs comportent souvent beaucoup moins de cellules que le nombre qui serait nécessaire à une correction efficace. Ainsi par exemple, dans les dispositifs tels que ci-dessus décrits, les cellules piézoélectriques sont disposées suivant un arrangement en deux dimensions, c'est-à-dire formant une matrice qui est habituellement de 5 X 4 cellules déformables pour une surface de plusieurs dizaines de cm².

De plus, ces moyens électriques à haute tension ont des temps de réponse relativement lents, et dans le cas de la correction de phase ci-dessus mentionnée, ces temps de réponse ne sont pas toujours compatibles avec une compensation dynamique des turbulences atmosphériques (typiquement 100 HZ-1KHZ) qui perturbent le trajet optique des équipements astronomiques ou optroniques.

L'invention concerne un dispositif de modulation de lumière dans lequel la lumière est modulée à l'aide de cellules déformables activées par l'application d'une tension électrique.

L'invention constitue une solution particulièrement intéressante aux problèmes de commande des cellules déformables, sans présenter les inconvénients ci-dessus cités, aussi bien sur le plan des caractéristiques techniques que du coût et de la simplicité de mise en oeuvre.

On notera qu'il est connu de la demande de brevet GB-A-238 880 un miroir de modulation utilisant l'effet piézoélectrique et des photoconducteurs, mais c'est à l'aide de masques non commandables électriquement. Il est connu également du brevet US-A-4 967 063 de réaliser des miroirs déformables par effet piézoélectrique, mais sans photoconducteurs pour commander les actuateurs piézoélectriques.

Selon l'invention, un dispositif de modulation de lumière, comprenant un miroir de modulation réfléchissant la lumière à module à l'aide d'une surface réfléchissante, le miroir de modulation comportant des cellules du type cellules déformables sous l'effet d'une tension de commande électrique, chaque cellule déformable étant susceptible de présenter une variation de sa longueur en fonction de la valeur de la tension de commande et d'engendrer une déformation locale de la surface réfléchissante, la tension de commande étant appliquée entre deux faces opposées de chaque cellule déformable, l'une des faces étant une face fixe et l'autre face étant une face mobile, la tension de commande étant appliquée à chaque cellule déformable par l'intermédiaire d'un élément photoconducteur, ledit dispositif de modulation comportant en outre des moyens pour ajuster la résistivité présentée par chaque élément photoconducteur en fonction de la variation désirée pour la cellule déformable correspondante, caractérisé en ce que les moyens pour ajuster la résistivité des éléments photoconducteurs comprennent un écran à cristaux liquides comportant une pluralité de cellules à cristaux liquides éclairées à l'aide d'une source de lumière et produisant en réponse une pluralité de micro-faisceaux de lumière, chaque élément photoconducteur étant éclairé par au moins un micro-faisceau.

L'invention sera mieux comprise et d'autres caractéristiques qu'elle comporte, ainsi que d'autres avantages qu'elle présente, apparaîtront à la lecture de la description qui suit de certains de ses modes de réalisation, cette description étant faite à titre d'exemple non limitatif en référence aux dessins ci-annexés parmi lesquels :
- la figure 1 déjà décrite représente un dispositif de modulation optique à miroir de modulation, selon l'art antérieur, appliqué à la correction de phases d'un front d'onde ;
- la figure 2 montre schématiquement un dispositif de modulation optique conforme à l'invention, appliqué à la correction en phase d'un front d'onde ;
- la figure 3 montre schématiquement un mode de réalisation préféré d'un cellule déformable montrée à la figure 2
- la figure 4 montre schématiquement une autre manière de disposer un modulateur spatial de lumière montré à la figure 2 ;
- la figure 5 montre schématiquement un mode de réalisation préféré d'éléments photoconducteurs montrés à la figure 2 ;
- la figure 6 illustre une application de l'invention à la projection d'images type télévision ;

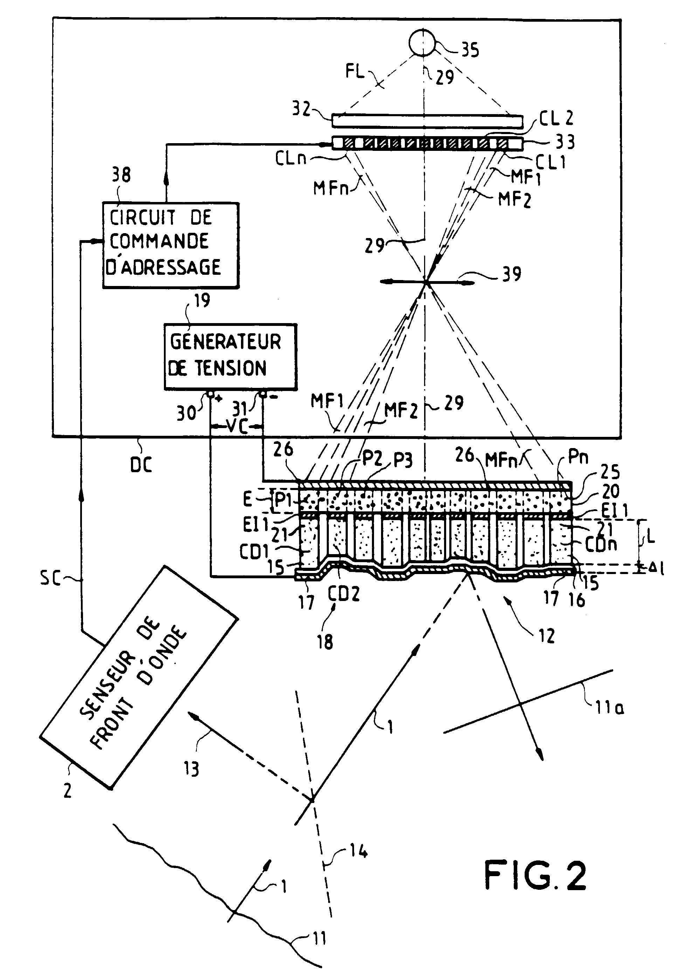

La figure 2 représente un dispositif de modulation optique 10 conforme à l'invention. Dans l'exemple non limitatif de la figure 2, le dispositif de modulation permet de corriger en phases un front d'onde 11 suivant une organisation générale semblable à celle déjà montré à la figure 1 : le front d'onde 11 à corriger se propage suivant les flèches 1 en direction d'un miroir de modulation 12 ; ce dernier remplit les mêmes fonctions que le miroir de modulation 3 de la figure 1 et il réfléchit une onde 11a qui est l'onde corrigée. Une partie du front d'onde symbolisée par une flèche 13, est déviée, à l'aide d'un miroir semi-transparent 14 par exemple, vers un système senseur 2 de front d'onde. Ce dernier délivre de façon classique des signaux de correction SC qui sont appliqués à un dispositif de commande DC lui-même destiné à commander le miroir de modulation 12.

Le miroir de modulation 12 comporte une pluralité de cellules déformables CD1 à CDn. Chaque cellule déformable comporte une face avant formant une extrémité mobile ou face mobile 15. Chaque face mobile 15 est solidarisée à un film souple 16 en élastomère par exemple.

Le film souple 16 sert à constituer une surface réfléchissante 18 vis-à-vis du front d'onde 11. La surface réfléchissante 18 est centrée sur un axe optique 29. Elle est susceptible de présenter des déformations localisées de son plan sous l'action des cellules déformables CD1 à CDn. La surface réfléchissante 18 est réalisée par une couche 17 d'un matériau électriquement conducteur, déposée sur le film souple 16 à l'opposé des cellules déformables CD1 à CDn. L'épaisseur du film souple 16 est faible et il constitue une capacité de forte valeur par rapport aux cellules déformables CD1 à CDn, de telle sorte que la chute de tension aux bornes du film peut être négligée et que la couche électriquement conductrice 17 constitue une électrode 17 commune à toutes les faces mobiles 15. Ceci constitue un exemple non limitatif, d'autres montages peuvent être adoptés, par exemple en déposant une couche métallisée sur chaque face du film souple 16.

Les cellules déformables CD1 à CDn sont du type cellules déformables sous l'effet d'une tension, comme il a été expliqué dans le préambule, et dans l'exemple non limitatif décrit, ces cellules sont en un matériau piézoélectrique, en céramique PZT par exemple ; elles reçoivent chacune une tension de commande délivrée par un générateur de tension 19 que comporte le dispositif de commande DC.

Selon une caractéristique de l'invention, d'une part la tension de commande est appliquée à chacune des cellules déformables CD1 à CDn par l'intermédiaire d'un élément photoconducteur P1 à Pn, et d'autre part, cet élément photoconducteur est éclairé afin d'ajuster sa résistivité, de manière que la tension de commande appliquée aux bornes de chaque cellule déformable ait la valeur désirée.

Dans l'exemple non limitatif décrit, les éléments photoconducteurs P1 à Pn sont constitués dans une même plaque 20 d'un matériau photoconducteur. Le matériau photoconducteur doit présenter une haute résistivité dans le noir. Ce matériau photoconducteur est constitué par exemple par un composé de Bismuth et de silicium et d'oxygène Bi₁₂ SiO₂₀ dont la résistivité dans le noir est de l'ordre de 10¹³ Ω-cm, alors que pour un éclairement incident de 10 mW.cm⁻² à la longueur d'onde de 0,514 µm, elle est de l'ordre de 10⁹ Ω-cm ; ou bien encore un composé d'Arséniure de Gallium semi-isolant S.I. GaAs dont la résistivité est de l'ordre de 10⁹ Ω-cm dans le noir et de l'ordre de 10⁶ Ω-cm pour un éclairement incident de 10 mW. cm⁻².

La plaque 20 de matériau photoconducteur est appliquée contre les cellules déformables CD1 à CDn, à l'opposé de la surface réfléchissante 18, c'est-à-dire en contact avec des faces arrières 21 de ces cellules déformables. Les cellules déformables CD1 à CDn sont disposées en deux dimensions ; elles forment un réseau matriciel dont les cellules visibles sur la figure 2 constituent par exemple une ligne et dont les colonnes sont dans un plan perpendiculaire à celui de la figure.

Une face 25 de la plaque 20, opposée aux cellules déformables CD1 à CDn, est en contact avec une couche électriquement conductrice formant une seconde électrode 26 dont la surface est sensiblement la même que celle de la plaque 20. La seconde électrode 26 est ainsi commune à tous les éléments photoconducteurs P1 à Pn ; ces derniers sont matérialisés sur la figure 2 en traits pointillés dans l'épaisseur E de la plaque 20 photoconductrice.

Le potentiel électrique auquel est portée la seconde électrode 26 est appliquée aux faces arrières 21 des cellules CD1 à CDn, au travers des éléments photoconducteurs P1 à Pn ; pour une meilleure répartition de ce potentiel sur ces faces arrières 25, une électrode intermédiaire EI1 peut être interposée entre chacune de ces dernières et les éléments photoconducteurs P1 à Pn comme représenté à la figure 2. Toutes ces électrodes intermédiaires EI1 sont bien entendu électriquement isolées les unes des autres.

Dans l'exemple non limitatif représenté à la figure 2, la plaque 20 photoconductrice est fixe et rigide, et les faces arrières 25 des cellules déformables constituent les faces fixes de ces dernières. Par conséquent, entre les deux faces 15, 21 des cellules déformables, une modification Δ L de la longueur L de ces dernières engendre une même modification locale de la position de la surface réfléchissante 18. Ceci est rendu possible d'une part, par la souplesse du film souple 16 qui peut être constitué par exemple par un film polymère ou élastomère et, d'autre part, par la souplesse de la première électrode commune 17.

La première électrode commune t7 peut être réalisée par exemple, de manière en elle-même classique, par le dépôt sur le film 16 d'une couche conductrice métallique en or ou en argent par exemple, par la technologie des couches minces.

La première et la seconde électrodes communes 17, 26 sont reliées respectivement à une première et à une seconde sortie 30, 31 du générateur de tension 19, sorties qui respectivement délivrent les polarités positive et négative +, - de la tension de commande Vc, destinée à être appliquée aux cellules déformables CD1 à CDn.

Dans la configuration de l'invention, cette tension de commande Vc est appliquée avec sa valeur maximum entre les deux électrodes communes 17, 26, et c'est par un éclairement de la plaque 20 photoconductrice et plus précisément des éléments photoconducteurs P1 à Pn que l'on ajuste à la valeur désirée la tension de commande Vc appliquée à chacune des cellules déformables CD1 à CDn.

A cette fin, la seconde électrode commune 26 doit être transparente; elle peut être par exemple en oxyde d'étain Sₙ O₂ et être constituée d'une couche déposée sur la plaque 20 par une méthode en elle-même classique.

Dans une version préférée de l'invention, l'éclairement de la plaque 20 photoconductrice ou plus précisément l'éclairement des éléments photoconducteurs P1 à Pn est réalisé à l'aide d'un modulateur spatial de lumière 33 que comporte le dispositif de commande DC, afin d'effectuer la répartition spatiale désirée de l'éclairement.

Le modulateur spatial 33 peut être constitué à l'aide par exemple d'un écran à cristaux liquides du type notamment à matrice active, ou bien encore du type ferroélectrique. Les techniques mises en oeuvres pour ces écrans sont identiques à celles développées pour les écrans de visualisation. Ainsi le modulateur spatial 33 peut comporter un écran à cristaux liquides du type à matrices actives à transistor TFT, (TFT de Thin Film Transistor) comportant une matrice de cellules à cristaux liquides CL1 à CLn dont le nombre peut être par exemple 128 x 128 où même aller jusqu'à 1024 x 1024 ; avec un nombre de niveaux de gris compris par exemple entre 10 et 30 et une cadence vidéo de l'ordre de 40 ms. Dans un tel cas, chaque cellule à cristaux liquides CL1 à CLn peut correspondre à un élément photoconducteur P1 à Pn, le nombre de niveaux de gris étant suffisant pour réaliser une modulation fine de l'éclairement. Mais dans le cas d'une matrice à cristaux liquides ferroélectriques, l'équivalent d'un éclairement variable peut être obtenu en modulant le nombre des cellules à cristaux liquides adressées et projetées sur un élément photoconducteur P1 à Pn donné ; autrement dit, dans ce cas plusieurs cellules à cristaux liquides peuvent être affectées à l'éclairement de chaque élément photoconducteur.

Le dispositif de commande DC comporte en outre une source de lumière 35 située sur l'axe optique 29 et qui produit une lumière correspondant au domaine de sensibilité du matériau photoconducteur constituant la plaque 20. Cette lumière peut être incohérente, produite par exemple par un réseau de minitubes fluorescents (non représentés) ou par une lampe halogène. Mais si cela est utile, la source 35 peut comporter un laser continu émettant dans le domaine de sensibilité du photoconducteur.

Le faisceau de lumière FL produit par la source 35 est collecté par un condenseur 32, puis il traverse ensuite le modulateur spatial 33 qui est également centré sur l'axe optique 29. Dans l'exemple non limitatif de la description, le modulateur spatial 33 comporte autant de cellules élémentaires CL1 à CLn qu'il y a d'éléments photoconducteurs P1 à Pn, et le faisceau de lumière FL émerge du modulateur spatial 33 sous la forme d'autant de micro-faisceaux MF1 à MFn qui passent par un objectif 39 et dont l'intensité est fonction du niveau d'opacité de la cellule élémentaire ou cellule à cristaux liquides CL1 à CLn traversée.

Le degré d'opacité ou à l'inverse le degré de transmission des cellules élémentaires CL1 à CLn est commandé par une opération en elle-même classique d'adressage de chaque cellule élémentaire, par un circuit de commande d'adressage traditionnel 38, réalisant un adressage de type matriciel sur la base des signaux de commande SC délivrés par le senseur 2 de front d'onde.

Dans un tel cas l'adressage est de type matriciel, de telle manière que par l'intermédiaire du modulateur spatial 33 et des éléments photoconducteurs P1 à Pn, la commande c'est-à-dire l'adressage des cellules déformables CD1 à CDn est également matriciel, ce qui simplifie considérablement la commande et l'interconnexion de ces cellules déformables.

Le fonctionnement est le suivant :

La tension de commande Vc, délivrée par le générateur de tension 19, est appliquée entre les deux électrodes communes 17, 26 avec sa valeur maximum.

A chaque cellule déformable CD1 à CDn correspond un élément photoconducteur P1 à Pn susceptible d'être éclairé par un micro-faisceau MF1 à MFn. Chaque micro-faisceau MF1 à MFn est modulé en intensité en fonction du degré d'opacité de la cellule à cristaux liquides CL1 à CLn qu'il a traversé, et donc chaque cellule à cristaux liquides CL1 à CLn ou cellule élémentaire correspond à un photoconducteur P1à Pn déterminé.

La résistivité du matériau photoconducteur dans le noir est suffisamment élevée, pour qu'en l'absence d'éclairement aucune tension ne soit appliquée aux cellules déformables CD1 à CDn (c'est-à-dire aux moteurs piézo). Sous illumination locale du photoconducteur par le modulateur spatial 33 de lumière, la conductivité locale du photoconducteur (c'est-à-dire de l'élément photoconducteur P1 à Pn éclairé) augmente, et la tension de commande Vc est appliquée à la cellule déformable CD1 à CDn correspondante.

Ainsi par exemple, si l'état de la première cellule élémentaire CL1 est tel qu'elle laisse passer un micro-faisceau MF1, ce dernier éclaire le premier élément photoconducteur P1 d'où résulte une application de la tension de commande Vc à la première cellule déformable CD1 : la dimension de l'élément photoconducteur P1 correspond à la surface éclairée par le micro-faisceau.

La projection sur la plaque 20 photoconductrice d'une répartition d'éclairement ΔI (x, y) induit, sur la matrice de cellules déformables CD1 à CDn, une modulation spatiale de la tension appliquée Y (x,y) de la forme :
ΔV (x, y) = β .ΔI (x, y) ; où β = dV/dI traduit la pente de la caractéristique tension appliquée sur une cellule déformable en fonction de l'éclairement sur l'élément photoconducteur correspondant.

Dans la région de fonctionnement linéaire de la cellule déformable, il résulte un allongement Δl de cette dernière, et un déphasage Δ⌀ induit sur l'onde optique de la forme
Δ⌀ = 4π/λ. ΔI, où λ est la longueur d'onde de l'onde ; soit Δ⌀ = (d⌀/dI) x Δl ; où d⌀/dI est la pente de la caractéristique déphasage/éclairement.

Dans l'exemple non limitatif décrit en référence à la figure 2, les cellules déformables CD1 à CDn sont des disques piézoélectriques dont la longueur L est constituée à l'aide d'un unique élément de céramique piézoélectrique. Mais dans le but d'accroître la variation de longueur Δl pour une même tension de commande Vc, il est possible d'empiler deux ou davantage éléments piézoélectriques pour constituer une cellule déformable CD1 à CDn.

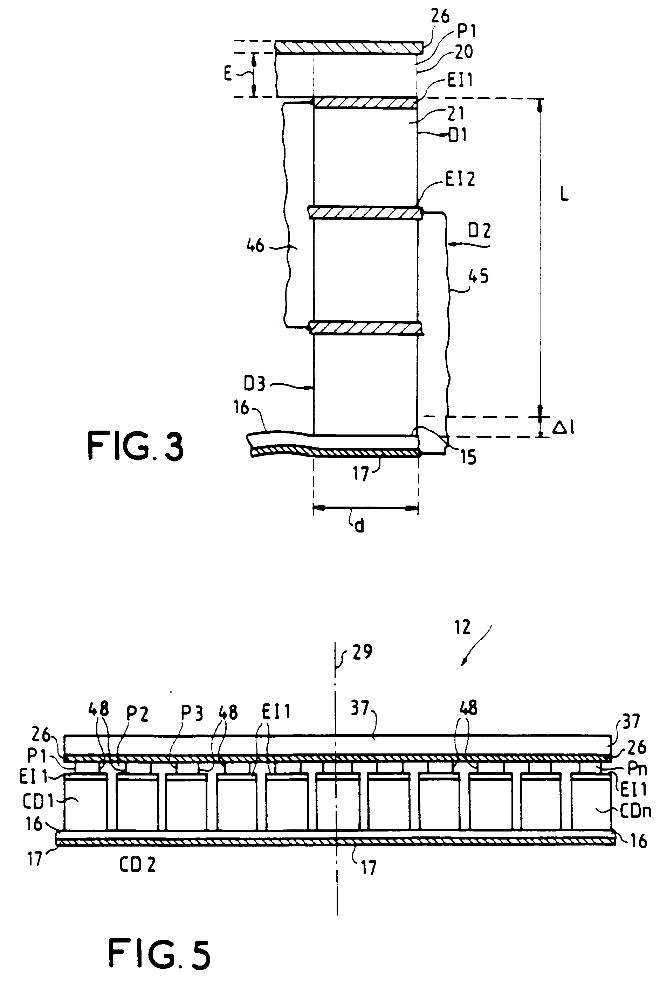

La figure 3 illustre à titre d'exemple non limitatif une manière d'alimenter en tension une cellule déformable, la première cellule déformable CD1 par exemple.

Dans l'exemple montré à la figure 3, la première cellule déformable CD1 est formée par trois éléments ou disques piézoélectriques D1, D2, D3 montés bout à bout de manière à ajouter leur allongement.

Le premier disque D1 est disposé contre la plaque 20 photoconductrice (partiellement représentée) avec laquelle il est électriquement en contact par l'intermédiaire de la première électrode intermédiaire EI1 ; la face arrière de ce disque D1 constitue la face arrière fixe 21 de la cellule déformable CD1 ; l'autre extrémité ou face de ce premier disque D1 porte une seconde électrode intermédiaire EI2. Le second disque D2 est solidarisé par sa première extrémité, par collage par exemple, à la seconde électrode intermédiaire EI2, et son autre extrémité porte elle-même une troisième électrode intermédiaire EI3. Le troisième disque D3 est solidarisé par une extrémité à la troisième électrode intermédiaire EI3, et son autre extrémité représente la face mobile 15 de la cellule déformable CD1, c'est-à-dire qu'elle est solidarisée au film souple 16 qui lui-même porte la première électrode commune 17.

Comme dans l'exemple précédent, la tension de commande Vc de valeur maximum provenant du générateur de tension 19, est appliquée entre les deux électrodes communes 17, 26, les polarités positive + et négative - étant appliquées respectivement à la première électrode commune 17 et la seconde électrode commune 26. La tension de commande effectivement appliquée à la cellule déformable CD1 et dont la valeur est ajustée à l'aide de la résistivité du matériau photoconducteur, est celle qui est développée entre la première électrode commune 17 et la première électrode intermédiaire EI1.

L'alimentation en parallèle des différents disques D1, D2, D3 est réalisée à l'aide de deux connexions 45, 46, constituées par des fils souples par exemple : la première connexion 45 relie la première électrode commune 17 (qui est à la polarité positive +) avec la seconde électrode intermédiaire EI2 ; et la seconde connexion 46 relie la première électrode intermédiaire EI1 (qui est à la polarité négative -) à la troisième électrode intermédiaire EI3.

L'exemple de la figure 3 peut s'appliquer à la réalisation de toutes les cellules déformables CD1 à CDn. D'autre part, un agencement semblable à celui montré à la figure 3 peut s'appliquer aussi avec un nombre différent de disques, avec éventuellement des interconnexions différentes si les disques sont en nombre pair.

On donne ci-après à titre d'exemple non limitatif, des indications sur un exemple de réalisation dans lequel était utilisée une matrice de 32 x 32 cellules déformables constituées chacune d'un empilement de trois disques D1, D2, D3 tels que montrés à la figure 3; les cellules déformables étant disposées au pas de 5 mm et formant une surface de 150 mm x 150 mm ; avec pour chaque cellule trois disques de céramique PZT dont l'élongation Δl est de l'ordre de 0,5 µm pour 1000 V, et ayant une diamètre d de 3 mm.

La plaque 20 photoconductrice peut être réalisée en Bi₁₂ SiO₂₀ en une épaisseur E de 1 mm.

Avec une puissance optique pour l'adressage du photoconducteur de l'ordre de 1 à 2 watts, il résulte un allongement Δl de l'ordre de 4,5 µm des cellules déformables commandées : soit une tension appliquée à ces cellules d'environ 3.000 volts pour une tension maximum délivrée par le générateur de tension 19 de l'ordre de 4500 volts.

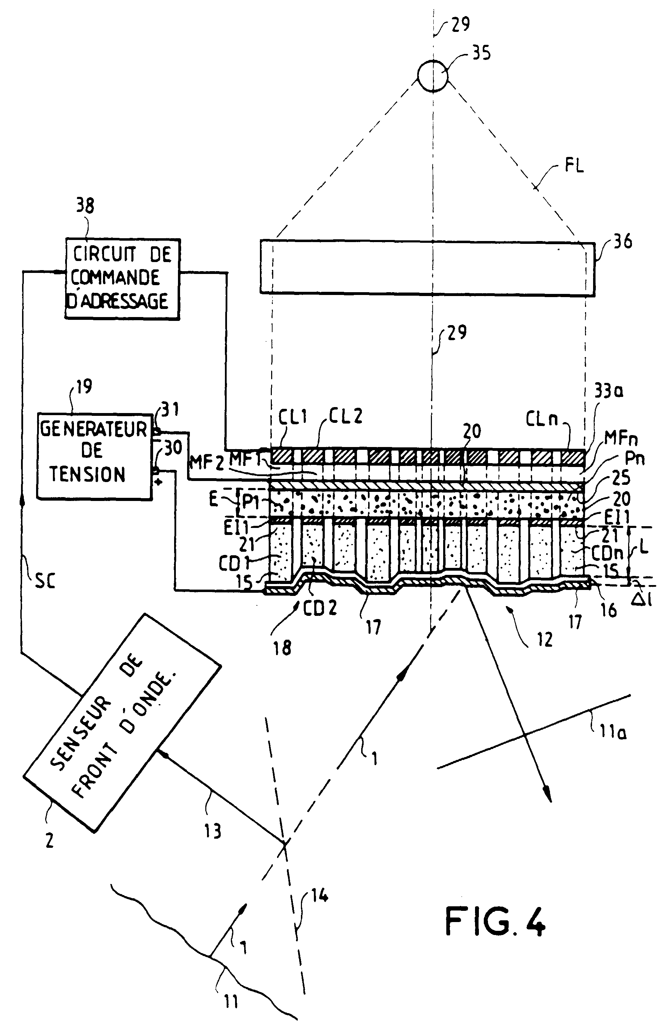

La figure 4 montre un mode de réalisation de l'invention dans lequel un modulateur spatial 33a, destiné à engendrer la répartition d'éclairement voulue sur les éléments photoconducteurs P1 à Pn, est situé à proximité de la matrice de cellules déformables CD1 à CDn. Dans ce cas les dimensions du modulateur spatial 33 sont sensiblement les mêmes que celles de la matrice.

Le faisceau de lumière produit par la source 35 passe par un condenseur 36, avant de traverser le modulateur spatial 33a qui détermine des micro-faisceaux MF1 à MFn ; le fonctionnement est semblable à celui déjà expliqué en référence à la figure 2.

Il est à noter qu'il peut être intéressant de rendre les éléments photoconducteurs P1 à Pn indépendants les uns des autres, en vue notamment de réaliser une meilleure isolation électrique entre eux.

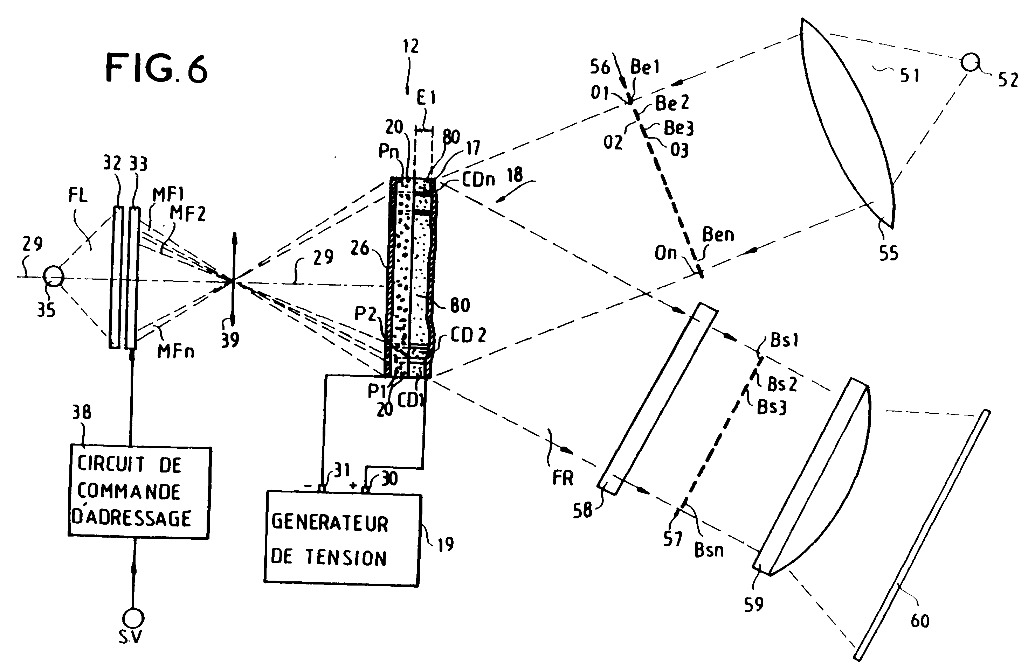

La figure 5 montre à titre d'exemple non limitatif, le miroir de modulation 12 dans une version de l'invention dans laquelle les éléments photoconducteurs P1 à Pn sont indépendants les uns des autres, au contraire de l'exemple de la figure 2 où ils appartiennent à une même plaque 20 d'un matériau photoconducteur.

A partir d'une plaque d'un matériau photoconducteur telle que la plaque 20 déjà citée, ou bien d'une couche photoconductrice portée comme dans l'exemple de la figure 5 par un support transparent 37, en verre par exemple, la plaque ou la couche photoconductrice peuvent être gravées en forme d'ilôts 48, par gravure mécanique par exemple, chaque ilôt ou pavé constituant un élément photoconducteur P1 à Pn. Chaque pavé ou élément photoconducteur P1 à Pn est solidarisé à la première électrode intermédiaire EI1 d'une cellule déformable CD1 à CDn, comme précédemment expliqué ; et le support transparent 37 est orienté bien entendu vers l'écran à cristaux liquides 33 ou 33a montré aux figures 2 et 4.

Comme dans les versions précédentes, tous les éléments photoconducteurs P1 à Pn sont reliés à la seconde électrode commune 26. A cet effet, cette dernière est disposée entre le support transparent et les pavés 48 ou éléments photoconducteurs. Ceci conduit à une isolation électrique parfaite entre les pavés photoconducteurs portés à des potentiels différents.

Une commande des cellules déformables CD1 à CDn, telle qu'elle a été ci-dessus décrite, représente une simplification considérable par rapport à l'art antérieur. La suppression des moyens électriques de commutation et l'adressage en parallèle de l'ensemble des cellules déformables par modulation spatiale bi-dimensionnelle d'un faisceau lumineux intense, conformément à l'invention, permettent de réaliser et d'utiliser des miroirs de modulation de surfaces importantes et comportant une très grande densité de zones de correction.

Aussi, un agencement conforme à l'invention peut s'appliquer à d'autres domaines que celui de la correction d'un front d'onde, et en particulier il peut s'appliquer à réaliser et à projeter des images de type images de télévision.

Dans ce but, il est proposé d'utiliser un miroir de modulation fonctionnant à l'aide d'un adressage semblable à celui décrit en référence aux figures 2,3,4 et 5, mais utilisé, dans un dispositif de visualisation.

La figure 6 montre de manière schématique, et à titre d'exemple non limitatif, un miroir de modulation 12 conforme à l'invention, utilisé dans un dispositif de visualisation 50 permettant de réaliser et de projeter des images du type images de télévision.

Il est à noter que, dans une application de l'invention à la correction d'un front d'onde, les variations de longueur des cellules déformables CD1 et CDn doivent être relativement importantes, de l'ordre de plusieurs micromètres. Par contre, dans l'application à la réalisation d'images, ces variations peuvent être beaucoup plus faibles, par exemple de l'ordre de 0,1 µm, En conséquence, il est intéressant d'utiliser une feuille de matériau déformable sous l'effet d'une tension électrique pour réaliser les cellules déformables CD1 à CDn, en utilisant par exemple un polymère piézoélectrique comme le PVF2 ou un élastomère.

C'est une telle version de l'invention qui est illustrée à la figure 6, dans laquelle les cellules déformables CD1 à CDn sont réalisées à partir d'une feuille 80 de matériau se déformant sous l'action d'une tension appliquée entre ses faces ; par exemple un polymère piézoélectrique notamment du type PVF2, ou encore un élastomère ou un matériau type visco-élastique.

Dans le cas d'une feuille 80 en PVF2 par exemple, ayant une épaisseur E1 de l'ordre de 200 µm on peut obtenir une augmentation de cette épaisseur de l'ordre de 0,1 µm en lui appliquant une tension de commande de l'ordre de 3000 volts. L'épaisseur E1 de la feuille 80 au repos représente la longueur L précédemment montrée pour les cellules déformables CD1 à CDn ; il est à noter que sur les figures les proportions des dimensions ne sont pas respectées pour une meilleure clarté.

La feuille 80 du matériau destiné à former les cellules déformables CD1 à CDn est solidarisée, par collage par exemple à la plaque 20 de matériau photoconducteur, à l'opposé de la seconde électrode commune 26. La feuille 80 est recouverte d'une couche électriquement conductrice 17 qui permet de réaliser, comme dans les exemples précédents, la première électrode commune 17 et la surface réfléchissante 18, avec la différence cependant que dans l'exemple de la figure 6 la couche conductrice 17 est directement en contact avec les cellules déformables CD1 à CDn.

La surface réfléchissante 18 du modulateur 12 à miroir est destinée à réfléchir et à moduler spatialement en position une lumière 51 produite par une seconde source de lumière 52.

Dans l'exemple non limitatif décrit, les éléments photoconducteurs P1 à Pn sont commandés et sont définis d'une même manière que dans l'exemple de la figure 2, à savoir que :
- la lumière produite par la première source 35 passe par un condenseur 32, puis traverse ensuite le modulateur spatial 33 dont elle émerge sous la forme de micro-faisceaux MF1 à MFn
- Les micro-faisceaux MF1 à MFn passent ensuite par un objectif 39 avant d'éclairer chacun une zone de la plaque 20 en matériau photoconducteur où ils définissent ainsi les éléments photoconducteurs P1 à Pn et leur résistivité.

Ainsi quand des zones destinées à constituer des éléments photoconducteurs P1 à Pn sont éclairées par les micro-faisceau MF1 à MFn, une tension de commande est appliquée localement à la feuille 80, entre la première électrode commune 17 et chaque élément photoconducteur éclairé, ce qui détermine une cellule déformable CD1 à CDn dans l'épaisseur E1 de la feuille 80, en vis à vis de chaque élément photoconducteur P1 à Pn. Il est possible également de définir les dimensions des cellules déformables CD1 à CDn en disposant entre la feuille 80 et la plaque 20 des surfaces électriquement conductrices telles que les premières électrodes intermédiaires EI1 montrées à la figure 2. Comme dans les exemples précédents, chaque élément photoconducteur P1 à Pn éclairé provoque une augmentation de la longueur de la cellule déformable CD1 à CDn correspondante d'où résulte une déformation localisée de la surface réfléchissante 18.

En fait, dans cette application, la surface réfléchissante 18 du miroir de modulation 12 remplit une fonction semblable à celle qui est remplie par un film d'huile, dans un dispositif de projection de télévision connu sous le nom de "Eidophor".

Les dispositifs de projection du type "Eldophor" sont connus depuis de nombreuses années, notamment pour former des images de télévision en noir et blanc et en couleurs. Leurs caractéristiques et leur fonctionnement sont expliqués notamment dans l'article "Principles of simultaneous-Color Projection Television Using Fluid Deformation", par W.E. GLENN, parue dans "Journal of the SMPTE" September 1970, volume 79, pages 788-794.

L'article ci-dessus cité décrit différentes manières de réaliser et d'utiliser des déformations de la surface du film d'huile, et cet article doit être considéré comme faisant partie de la présente description. Dans un dispositif de projection du type "Eidophor", on réalise des déformations localisées de la surface d'un film d'huile. A chaque surface élémentaire de l'image à former, correspond une zone du film d'huile dans laquelle peut être réalisée une déformation de ce dernier. Une lumière traverse le film d'huile et, en coopération avec des masques comportant des barres opaques et un dispositif optique du type optique "de Schlieren", chaque zone déformée engendre la projection de lumière sur un écran de visualisation dans la surface élémentaire d'image correspondante ; la quantité de lumière projetée sur l'écran de visualisation est d'autant plus grande que la déformation est forte.

Les déformations du film d'huile sont obtenues à l'aide d'un faisceau d'électrons modulé par des informations de type vidéo et qui effectue un balayage de la surface du film d'huile. Les charges engendrées par le faisceau d'électrons produisent des déformations de la surface du film d'huile, par un effet de pression électrostatique.

Le film d'huile doit avoir une épaisseur bien contrôlée et constante, ce qui pose des problèmes importants, du fait notamment que l'huile présente une durée de vie relativement faible sous l'effet d'un bombardement par des électrons. De plus, le film d'huile exige d'être constamment refroidi.

Il est donc particulièrement intéressant de réaliser des déformations d'une surface, sans devoir soumettre cette surface à un bombardement d'électrons. Par suite, la surface réfléchissante 18 du miroir de modulation 12 dont les déformations, dues aux cellules déformables CD1 à CDn sont commandées conformément à l'invention, représente une solution très avantageuse, et qui est rendue applicable industriellement grâce à l'invention et notamment à l'adressage qui est réalisé ainsi qu'à la suppression des moyens électriques de commutation habituels.

Comme enseigné dans l'article de W.E. Glenn ci-dessus cité, dans le dispositif de l'invention la lumière 51 à moduler passe en premier lieu par un condensateur 55, puis traverse ensuite un masque d'entrée 56 comportant des barres opaques d'entrées Be1 à Ben entre lesquelles la lumière peut passer par des ouvertures 01 à 0n. Puis la lumière 51 parvient ensuite sur la surface réfléchissante 18 par laquelle elle est réfléchie et forme un faisceau réfléchi FR qui se propage en direction d'un écran de visualisation 60. Après réflexion par la surface réfléchissante 18, le faisceau réfléchi FR passe successivement par un dispositif d'optique de "Schlieren" 58, un masque de sortie 57 comportant des barres de sorties Bs1 à Bsn opaques, et par un objectif de projection 59 avant d'atteindre l'écran de visualisation 60.

Le fonctionnement est du type de celui qui est déjà connu dans l'Eidophor : en supposant que la surface réfléchissante 18 soit complètement plane, c'est-à-dire par exemple que toutes les cellules déformables CD1 à CDn comportent leur longueur L la plus faible, toute lumière provenant de la seconde source 52 et passant entre les barres d'entrée Be1 à Ben est bloquée par les barres de sortie Bs1 à Bsn, et ne parvient pas jusqu'à l'objectif de projection 59.

Par contre, pour la lumière réfléchie au niveau de cellules déformables CD1 à CDn commandée, cette lumière peut passer entre les barres de sortie Bs1 à Bsn. Dans un tel cas, plus l'allongement d'une cellule déformable CD1 à CDn donnée est grand, et plus est grande la quantité de lumière qui émerge du second masque 57, c'est-à-dire des barres de sortie Bs1 à Bsn, après réflexion au niveau de cette cellule déformable donnée.

Si l'on considère que chaque cellule déformable CD1 à CDn correspond à une surface élémentaire d'une image à visualiser sur l'écran de projection 60, on peut aisément réaliser des images, de type télévision notamment, en adressant les cellules déformables CD1 à CDn d'une manière semblable à celle décrite précédemment, à l'aide de l'écran à cristaux liquides 33 par exemple. Mais dans ce cas bien entendu, le circuit de commande d'adressage 38, qui commande l'écran à cristaux liquides, reçoit des signaux vidéo SV eux-mêmes classiques, relatifs à des images vidéo de télévision.

Le fonctionnement du dispositif de visualisation de l'invention, tel qu'il a été ci-dessus décrit, et quel que soit le mode de réalisation des cellules déformables CD1 à CDn, s'applique de manière simple à former des images en noir et blanc.

Mais avec le dispositif de l'invention il est possible aussi de réaliser des images en couleurs, en appliquant des méthodes semblables à celles décrites dans l'article déjà cité de W.E GLENN : par exemple en utilisant un dispositif rotatif (non représenté) de filtres aux trois couleurs primaires, permettant de former les trois couleurs séquentiellement ; ou bien avec une méthode qui consiste à utiliser trois dispositifs de projection monochromes, chacun à une couleur différente, et de combiner les trois images, ou encore en utilisant des diffractions de lumière engendrées par le film d'huile et, à l'aide d'un dispositif optique du type optique de "Schlieren" ainsi qu'un masque d'entrée et un masque de sortie, pour obtenir des couleurs rouges, bleues et vertes.

Cette description constitue un exemple non limitatif, qui montre qu'un dispositif de modulation optique conforme à l'invention peut s'appliquer aussi bien à la correction de fronts d'ondes qu'à réaliser des images en noir et blanc ou couleurs, notamment projetées sur grand écran avec une forte luminosité. Mais le dispositif optique de l'invention peut être mis en oeuvre dans d'autres applications de manière avantageuse, dès lors qu'elles impliquent de moduler spatialement la lumière.

## Revendications

1. Dispositif de modulation de lumière, comprenant un miroir de modulation (12) réfléchissant la lumière à moduler à l'aide d'une surface réfléchissante (18), le miroir de modulation comportant des cellules du type cellules déformables (CD1 à CDn) sous l'effet d'une tension électrique de commande, chaque cellule déformable (CD1 à CDn) étant susceptible de présenter une variation (ΔL) de sa longueur (L) en fonction de la valeur de la tension de commande et d'engendrer une déformation locale de la surface réfléchissante (18), la tension de commande étant appliquée entre deux faces (15,21) opposées de chaque cellule déformable, l'une des faces étant une face fixe (21) et l'autre face (15) étant une face mobile, la tension de commande étant appliquée à chaque cellule déformable (CD1 à CDn) par l'intermédiaire d'un élément photoconducteur (P1 à Pn), le dispositif de modulation comportant en outre des moyens (35, 36, 33) pour ajuster la résistivité présentée par chaque élément photoconducteur (P1 à Pn) en fonction de la variation (ΔL) désirée pour la cellule déformable correspondante, caractérisé en ce que les moyens (35, 36, 33) pour ajuster la résistivité des éléments photoconducteurs comprennent un écran à cristaux liquides (33) comportant une pluralité de cellules à cristaux liquides (CL1 à CLn) éclairées à l'aide d'une source (35) de lumière et produisant en réponse une pluralité de micro-faisceaux de lumière (MF1 à MFn), chaque élément photoconducteur (P1 à Pn) étant éclairé par au moins un micro-faisceau (MF1 à MFn).

2. Dispositif de modulation selon la revendication 1, caractérisé en ce que les cellules déformables (CD1 à CDn) sont disposées suivant un arrangement matriciel, et en ce qu'il comporte en outre un circuit de commande d'adressage (38) de type matriciel servant à commander les cellules déformables (CD1 à CDn) par l'intermédiaire de l'écran à cristaux liquides (33).

3. Dispositif de modulation selon l'une des revendications précédentes, caractérisé en ce que chaque cellule déformable (CD1 à CDn) est disposée entre un élément photoconducteur (P1 à Pn), avec lequel elle est en contact par sa face fixe (21), et une première électrode (17) commune à toutes les cellules déformables.

4. Dispositif de modulation selon l'une quelconque des revendications précédentes, caractérisé en ce que les éléments photoconducteurs (P1 à Pn) sont disposés entre la face (21) fixe des cellules déformables (CD1 à CDn) et une seconde électrode (26) transparente commune à tous les éléments photoconducteurs (P1 à Pn).

5. Dispositif de modulation selon l'une des revendications précédentes, caractérisé en ce que les éléments photoconducteurs (P1 à Pn) sont contenus dans une même plaque (20) d'un matériau photoconducteur, et sont individualisés par un éclairement des moyens (35, 36, 33) pour ajuster la résistivité des éléments photoconducteurs.

6. Dispositif de modulation selon l'une quelconque des revendications 1 à 5, caractérisé en ce que les éléments photoconducteurs (P1 à Pn) sont individualisés et séparés les uns des autres.

7. Dispositif de modulation selon l'une des revendications précédentes, caractérisé en ce que la tension de commande des cellules déformables (CD1 à CDn) est appliquée entre deux électrodes (17, 26) dont l'une est commune à toutes les faces mobiles (15) des cellules déformables et dont l'autre est commune aux éléments photoconducteurs (P1 à Pn), la tension appliquée entre ces deux électrodes communes (17, 26) ayant une valeur égale ou supérieure à la valeur maximum à appliquer entre les deux faces (15,21) d'une cellule déformable (CD1 à CDn).

8. Dispositif de modulation selon l'une des revendications précédentes, caractérisé en ce que les cellules déformables (CD1 à CDn) sont en un matériau piézoélectrique.

9. Dispositif de modulation selon la revendication 8, caractérisé en ce qu'au moins une cellule déformable (CD1 à CDn) est formée à l'aide d'au moins deux éléments piézoélectriques montés bout à bout.

10. Dispositif de modulation selon l'une quelconque des revendications 8 ou 9, caractérisé en ce que le matériau piézoélectrique est une céramique PZT.

11. Dispositif de modulation selon la revendication 8, caractérisé en ce que le matériau piézoélectrique est un polymère piézoélectrique.

12. Dispositif de modulation suivant la revendication 11, caractérisé en ce que les cellules déformables sont constituées dans une feuille (80) d'un polymère d'un type PVF2.

13. Dispositif de modulation selon l'une des revendications 1 à 7, caractérisé en ce que les cellules déformables (CD1 à CDn) sont constituées dans une feuille (80) d'élastomère.

14. Dispositif de modulation selon l'une quelconque des revendications 11 ou 12 ou 13, caractérisé en ce que les faces mobiles (15) des cellules déformables (CD1 à CDn) sont en contact avec une première électrode (17) commune à toutes les faces mobiles et en ce que cette électrode commune constitue la surface réfléchissante (18).

15. Dispositif de modulation selon la revendication 5, caractérisé en ce qu'une couche souple (16) est interposé entre la première électrode commune (17) et les faces mobiles (15) des cellules déformables (CD1 à CDn).

16. Dispositif de modulation selon la revendication 15, caractérisé en ce que la première électrode (17) commune à toutes les faces mobiles constitue la surface réfléchissante (18).

17. Dispositif de modulation selon l'une des revendications précédentes, caractérisé en ce qu'il comporte en outre un système senseur (2) de front d'onde ledit système senseur, délivrant des informations (SC) relatives à une correction de phase à effectuer sur une onde de lumière réfléchie par le miroir de modulation (12), lesdites informations (SC) étant appliquées aux moyens (35, 36, 33) pour ajuster la résistivité des éléments photoconducteurs (P1 à Pn).

18. Dispositif de modulation selon l'une des revendications 1 à 16, caractérisé en ce qu'il comporte en outre, une source de lumière (52) et un masque d'entrée (56) interposé entre cette dernière et la surface réfléchissante (18), un dispositif optique (58) du type "optique de Schlieren" et un masque de sortie (57) interposés successivement entre la surface réfléchissante (18) et un écran (60) de projection, la source de lumière (52) produisant une lumière destinée à être réfléchie et modulée par la surface réfléchissante (18) afin de réaliser des images sur l'écran de projection (60) , des informations de type vidéo (SV) relatives aux images à réaliser étant appliqués aux moyens (35, 36, 33) pour ajuster la résistivité des éléments photoconducteurs.

19. Dispositif de modulation selon la revendication 18, caractérisé en ce qu'il comporte en outre des moyens pour que la lumière réfléchie par la surface réfléchissante (18) soit sous la forme de raies spectrales.

## Patentansprüche

1. Vorrichtung zur Lichtmodulation mit einem Modulationsspiegel (12), der das zu modulierende Licht an einer reflektierenden Oberfläche (18) reflektiert und unter dem Einfluß einer elektrischen Steuerspannung verformbare Zellen (CD1 bis CDn) besitzt, wobei jede verformbare Zelle (CD1 bis CDn) eine Veränderung (ΔL) ihrer Länge abhängig vom Wert der Steuerspannung erfahren kann und eine örtliche Verformung der reflektierenden Oberfläche (18) hervorruft, wobei die Steuerspannung zwischen zwei einander gegenüberliegenden Seiten (15, 21) jeder verformbaren Zelle angelegt wird und eine dieser Seiten eine örtlich festliegende Seite (21) und die andere (15) eine bewegliche Seite ist, wobei die Steuerspannung an jede verformbare Zelle (CD1 bis CDn) über ein Fotowiderstandselement (P1 bis Pn) angelegt wird, wobei die Modulationsvorrichtung außerdem Mittel (35, 36, 33) aufweist, um den spezifischen Widerstand jedes Fotowiderstandselements (P1 bis Pn) abhängig von der für die entsprechende verformbare Zelle gewünschten Längenänderung (ΔL) einzustellen, dadurch gekennzeichnet, daß die Mittel (35, 36, 33) zur Einstellung des spezifischen Widerstands der Fotowiderstandselemente einen Flüssigkristallschirm (33) mit einer Vielzahl von Flüssigkristallzellen (CL1 bis CLn) aufweisen, die von einer Lichtquelle (35) beleuchtet werden und dementsprechend eine Vielzahl von Mikrolichtstrahlen (MF1 bis MFn) erzeugen, wobei jedes Fotowiderstandselement (P1 bis Pn) von mindestens einem Mikrolichtstrahl (MF1 bis MFn) beleuchtet wird.

2. Modulationsvorrichtung nach Anspruch 1, dadurch gekennzeichnet, daß die verformbaren Zellen (CD1 bis CDn) matrixartig angeordnet sind und daß die Vorrichtung weiter eine matrixartige Adressensteuerschaltung (38) enthält, die die verformbaren Zellen (CD1 bis CDn) über den Flüssigkristallschirm (33) steuern können.

3. Modulationsvorrichtung nach einem der vorhergehenden Ansprüche, dadurch gekennzeichnet, daß jede verformbare Zelle (CD1 bis CDn) zwischen einem Fotowiderstand (P1 bis Pn), mit dem sie über ihre örtlich festliegende Seite (21) in Kontakt steht, und einer ersten Elektrode (17) liegt, die für alle verformbaren Zellen gemeinsam vorhanden ist.

4. Modulationsvorrichtung nach einem beliebigen der vorhergehenden Ansprüche, dadurch gekennzeichnet, daß die Fotowiderstandselemente (P1 bis Pn) zwischen der örtlich festliegenden Seite (21) der verformbaren Zellen (CD1 bis CDn) und einer zweiten, für alle Fotowiderstandselemente (P1 bis Pn) gemeinsamen lichtdurchlässigen Elektrode (26) liegt.

5. Modulationsvorrichtung nach einem der vorhergehenden Ansprüche, dadurch gekennzeichnet, daß die Fotowiderstandselemente (P1 bis Pn) in einer gemeinsamen Platte (20) aus Fotowiderstandsmaterial enthalten sind und durch eine Beleuchtung durch die Mittel (35, 36, 33), die den spezifischen Widerstand der Fotowiderstandselemente bestimmen, individuell definiert werden.

6. Modulationsvorrichtung nach einem beliebigen der Ansprüche 1 bis 5, dadurch gekennzeichnet, daß die Fotowiderstandselemente (P1 bis Pn) einzelne und voneinander getrennte Elemente sind.

7. Modulationsvorrichtung nach einem der vorhergehenden Ansprüche, dadurch gekennzeichnet, daß die Steuerspannung der verformbaren Zellen (CD1 bis CDn) zwischen zwei Elektroden (17, 26) angelegt wird, von denen eine für die beweglichen Seiten (15) aller verformbaren Zellen gemeinsam vorhanden ist, während die andere für alle Fotowiderstandselemente (P1 bis Pn) gemeinsam vorhanden ist, wobei die zwischen diesen beiden gemeinsamen Elektroden (17, 26) angelegte Spannung einen Wert hat, der gleich oder größer als der Höchstwert der Spannung ist, die zwischen die beiden Seiten (15, 21) einer verformbaren Zelle (CD1 bis CDn) angelegt wird.

8. Modulationsvorrichtung nach einem der vorhergehenden Ansprüche, dadurch gekennzeichnet, daß die verformbaren Zellen (Cd1 bis CDn) aus einem piezoelektrischen Material bestehen.

9. Modulationsvorrichtung nach Anspruch 8, dadurch gekennzeichnet, daß mindestens eine verformbare Zelle (CD1 bis CDn) von mindestens zwei stirnseitig aneinanderliegenden piezoelektrischen Elementen gebildet wird.

10. Modulationsvorrichtung nach einem beliebigen der Ansprüche 8 oder 9, dadurch gekennzeichnet, daß das piezoelektrische Material eine Piezo-Keramik ist.

11. Modulationsvorrichtung nach Anspruch 8, dadurch gekennzeichnet, daß das piezoelektrische Material ein piezoelektrisches Polymer ist.

12. Modulationsvorrichtung nach Anspruch 11, dadurch gekennzeichnet, daß die verformbaren Zellen aus einer Folie (80) eines Polymermaterials vom Typ PVF2 gebildet werden.

13. Modulationsvorrichtung nach einem der Ansprüche 1 bis 7, dadurch gekennzeichnet, daß die verformbaren Zellen (CD1 bis CDn) aus einer Elastomerfolie (80) bestehen.

14. Modulationsvorrichtung nach einem beliebigen der Ansprüche 11, 12 und 13, dadurch gekennzeichnet, daß die beweglichen Seiten (15) der verformbaren Zellen (CD1 bis CDn) mit einer ersten allen beweglichen Seiten gemeinsamen Elektrode (17) in Kontakt stehen und daß diese gemeinsame Elektrode die reflektierende Oberfläche (18) bildet.

15. Modulationsvorrichtung nach Anspruch 5, dadurch gekennzeichnet, daß eine elastische Schicht (16) zwischen die erste gemeinsame Elektrode (17) und die beweglichen Seiten (15) der verformbaren Zellen (CD1 bis CDn) eingefügt ist.

16. Modulationsvorrichtung nach Anspruch 15, dadurch gekennzeichnet, daß die erste allen beweglichen Seiten gemeinsame Elektrode (17) die reflektierende Oberfläche (18) bildet.

17. Modulationsvorrichtung nach einem der vorhergehenden Ansprüche, dadurch gekennzeichnet, daß sie außerdem ein Wellenfront-Sensorsystem (2) enthält, das Informationen (SC) bezüglich einer an einer vom Modulationsspiegel (12) reflektierten Lichtwelle durchzuführenden Phasenkorrektur liefert, die an die Mittel (35, 36, 33) zur Einstellung des spezifischen Widerstands der Fotowiderstandselemente (P1 bis Pn) angelegt werden.

18. Modulationsvorrichtung nach einem der Ansprüche 1 bis 16, dadurch gekennzeichnet, daß sie außerdem eine Lichtquelle (52) und eine zwischen die Lichtquelle und die reflektierende Oberfläche (18) eingefügt Eingangsmaske (56), eine optische Vorrichtung (58) vom Schlierentyp und eine zwischen die reflektierende Oberfläche (18) und einen Projektionsbildschirm (60) nacheinander eingefügte Ausgangsmaske (57) aufweist, wobei die Lichtquelle (52) ein Licht erzeugt, das an der reflektierenden Oberfläche (18) reflektiert und moduliert wird, um Bilder auf dem Projektionsbildschirm (60) zu erzeugen, wobei Informationen nach Art von Videoinformationen (SV) bezüglich der darzustellenden Bilder an die Mittel (35, 36, 33) zur Bestimmung des spezifischen Widerstands der Fotowiderstandselemente angelegt werden.

19. Modulationsvorrichtung nach Anspruch 18, dadurch gekennzeichnet, daß sie weiter Mittel aufweist, die dafür sorgen, daß das von der reflektierenden Oberfläche (18) reflektierte Licht in Form von Spektrallinien vorliegt.

## Claims

1. Light modulation device, comprising a modulation mirror (12) reflecting the light to be modulated with the aid of a reflecting surface (18), the modulation mirror including cells of the cell type which are deformable (CD1 to CDn) under the effect of an electrical control voltage, each deformable cell (CD1 to CDn) being capable of exhibiting a variation (ΔL) of its length (L) as a function of the value of the control voltage and of giving rise to a local deformation of the reflecting surface (18), the control voltage being applied between two opposite faces (15, 21) of each deformable cell, one of the faces being a fixed face (21) and the other face (15) being a movable face, the control voltage being applied to each deformable cell (CD1 to CDn) through a photoconductor element (P1 to Pn), the modulation device further including means (35, 36, 33) for adjusting the resistivity exhibited by each photoconductor element (P1 to Pn) as a function of the variation (ΔL) desired for the corresponding deformable cell, characterized in that the means (35, 36, 33) for adjusting the resistivity of the photoconductor elements comprise a liquid-crystal screen (33) including a plurality of liquid-crystal cells (CL1 to CLn) illuminated with the aid of a source (35) of light and producing in response a plurality of micro-beams of light (MF1 to MFn), each photoconductor element (P1 to Pn) being illuminated by at least one microbeam (MF1 to MFn).

2. Modulation device according to Claim 1, characterized in that the deformable cells (CD1 to CDn) are arranged in a matrix arrangement, and in that it further includes an addressing control circuit (38) of matrix type serving to control the deformable cells (CD1 to CDn) by way of the liquid-crystal screen (33).

3. Modulation device according to one of the preceding claims, characterized in that each deformable cell (CD1 to CDn) is arranged between a photoconductor element (P1 to Pn) with which it is in contact via its fixed face (21), and a first electrode (17) common to all the deformable cells.

4. Modulation device according to any one of the preceding claims, characterized in that the photoconductor elements (P1 to Pn) are arranged between the fixed face (21) of the deformable cells (CD1 to CDn) and a second transparent electrode (26) common to all the photoconductor elements (P1 to Pn).

5. Modulation device according to one of the preceding claims, characterized in that the photoconductor elements (P1 to Pn) are contained in the same plate (20) of a photoconductor material, and are individualized by an illumination of the means (35, 36, 33) for adjusting the resistivity of the photoconductor elements.

6. Modulation device according to any one of Claims 1 to 5, characterized in that the photoconductor elements (P1 to Pn) are individualized and separated from one another.

7. Modulation device according to one of the preceding claims, characterized in that the control voltage of the deformable cells (CD1 to CDn) is applied between two electrodes (17, 26), one of which is common to all the movable faces (15) of the deformable cells and the other of which is common to the photoconductor elements (P1 to Pn), the voltage applied between these two common electrodes (17, 26) having a value equal to or greater than the maximum value to be applied between the two faces (15, 21) of a deformable cell (CD1 to CDn).

8. Modulation device according to one of the preceding claims, characterized in that the deformable cells (CD1 to CDn) are of a piezoelectric material.

9. Modulation device according to Claim 8, characterized in that at least one deformable cell (CD1 to CDn) is formed with the aid of at least two piezoelectric elements mounted end-to-end.

10. Modulation device according to any one of Claims 8 or 9, characterized in that the piezoelectric material is a PZT ceramic.

11. Modulation device according to Claim 8, characterized in that the piezoelectric material is a piezoelectric polymer.

12. Modulation device according to Claim 11, characterized in that the deformable cells consist of a sheet (80) of a polymer of a PVF2 type.

13. Modulation device according to one of Claims 1 to 7, characterized in that the deformable cells (CD1 to CDn) consist of a sheet (80) of elastomer.

14. Modulation device according to any one of Claims 11 or 12 or 13, characterized in that the movable faces (15) of the deformable cells (CD1 to CDn) are in contact with a first electrode (17) common to all the movable faces and in that this common electrode constitutes the reflecting surface (18).

15. Modulation device according to Claim 5, characterized in that a flexible layer (16) is interposed between the first common electrode (17) and the movable faces (15) of the deformable cells (CD1 to CDn).

16. Modulation device according to Claim 15, characterized in that the first electrode (17) common to all the movable faces constitutes the reflecting surface (18).

17. Modulation device according to one of the preceding claims, characterized in that it further includes a wave front sensor system (2), the said sensor system delivering information (SC) relating to a phase correction to be performed on a light wave reflected by the modulation mirror (12), the said information (SC) being applied to the means (35, 36, 33) for adjusting the resistivity of the photoconductor elements (P1 to Pn).

18. Modulation device according to one of Claims 1 to 16, characterized in that it further includes a light source (52) and an entry mask (56) interposed between the latter and the reflecting surface (18), an optical device (58) of the "Schlieren optics" type, and an exit mask (57), interposed successively between the reflecting surface (18) and a projection screen (60), the light source (52) producing light intended to be reflected and modulated by the reflecting surface (18) so as to produce images on the projection screen (60), video-type information (SV) relating to the images to be produced being applied to the means (35, 36, 33) for adjusting the resistivity of the photoconductor elements.

19. Modulation device according to Claim 18, characterized in that it further includes means so that the light reflected by the reflecting surface (18) is in the form of spectral lines.
